# EUROPÄISCHE PATENTSCHRIFT

(11) **EP 0 964 493 B1**
(45) Veröffentlichungstag und Bekanntmachung des Hinweises auf die Patenterteilung: **27.02.2002**
(21) Anmeldenummer: 99106805.7
(22) Anmeldetag: 06.04.1999
(51) Int. Cl.: H02G 3/06

(54) **Winkelförmige Leitungseinführung mit einer Trennstelle zwischen den beiden Schenkeln**
Angular cable entry with a disconnecting point between the two legs
Entrée de câble de forme angulaire avec une lieu de séparation entre les deux branches

(30) Priorität: 10.06.1998 DE 19825989
(43) Veröffentlichungstag der Anmeldung: 15.12.1999
(73) Patentinhaber: Anton Hummel Verwaltungs-GmbH, D-79183 Waldkirch (DE)
(72) Erfinder: Bartholomä, Mario, 79297 Winden (DE); Zügel, Fritz, 79183 Waldkirch (DE); Götz, Volker, 79341 Kenzingen (DE); Adolf, Jürgen, 79211 Denzlingen (DE)
(74) Vertreter: Patent- und Rechtsanwaltssozietät, Maucher, Börjes & Kollegen

(56) Entgegenhaltungen:
- EP-A- 0 283 575
- DE-A- 3 403 772

## Beschreibung

Die Erfindung betrifft eine winkelförmige Leitungseinführung mit zwei im Winkel zueinander stehenden Schenkeln zum Einführen und/oder Befestigen von länglichen Körpern, zum Beispiel von elektrischen Leitungen, Kabeln oder von Schläuchen, unter einem Winkel in, durch oder an einer Wandung oder einem Gehäuse, wobei der längliche Körper schräg oder parallel zur Oberfläche der Wandung verläuft und insbesondere etwa rechtwinklig oder schräg in diese eintritt und wobei im Winkelbereich der winkelförmigen Leitungseinführung eine Trennstelle zwischen deren beiden Schenkeln vorgesehen ist, wobei die beiden Schenkel an der Außenseite des von ihnen gebildeten Winkels schwenkbar und/oder lösbar verbunden und an der Innenseite des Winkels lösbar kuppelbar sind.

Eine derartige winkelförmige Leitungseinführung ist aus DE 34 03 772 C2 bekannt. Dabei hat diese vorbekannte Leitungseinführung zwar den Vorteil, daß sich eine starre winkelförmige Leitungseinführung mit starr zueinander angeordneten Schenkeln bilden läßt, also ein genau vorgegebener Winkel eingehalten wird, trotzdem aber das Einführen des Kabels dadurch erleichtert ist, daß die Winkelschenkel in eine etwa fluchtende Position zueinander geklappt oder gebracht werden können. Dennoch können bei Anordnung der beiden Schenkel in dem vorgegebenen Winkel auch Querkräfte aufgenommen werden. Vor allem längliche Körper, die den Innenquerschnitt dieser winkelförmigen Leitungseinführung ganz oder fast ganz ausfüllen, können bei zunächst auseinander geklappten oder geöffneten Schenkeln eingeführt werden, wonach dann die Winkelschenkel in ihre winklig Lage zueinander gebracht und in dieser gekuppelt werden. Diese Kupplung der beiden Winkelschenkel kann jedoch nicht oder nur mit Schwierigkeiten und unter Umständen unter ihrer Zerstörung wieder geöffnet werden, so daß zwar das Montieren und Einführen des länglichen Körpers erleichtert ist, eine Demontage aber nicht oder nur unter Zerstörung der winkelförmigen Leitungseinführung möglich ist, so daß diese nach einer solchen Demontage unbrauchbar wird.

Der Erfindung liegt deshalb die Aufgabe zugrunde, eine winkelförmige Leitungseinführung der eingangs genannten Art zu schaffen, die die Vorteile der einfachen Montage bei etwa fluchtenden Schenkeln aufweist, aber dennoch auch eine einfache Demontage ohne Zerstörung der Leitungseinführung erlaubt. Vor allem soll dabei gleichzeitig die Handhabung des Verkuppelns der beiden Schenkel einerseits und des Verklemmens des länglichen Körpers andererseits an dem von dem Gehäuse oder der Wandung abgewandten Schenkel der Leitungseinführung für den Benutzer vereinfacht sein.

Zur Lösung dieser scheinbar widersprüchlichen Aufgabe ist die winkelförmige, zwei im Winkel zueinander stehende Schenkel aufweisende Leitungseinführung dadurch gekennzeichnet, daß an oder in einem ersten von der Wandung oder dem Gehäuse beabstandeten Schenkel eine durch ein Betätigungselement verstellbare Klemme oder ein Klemmeinsatz für den länglichen Körper und ein Kupplungsteil zum lösbaren Verbinden mit dem zweiten Schenkel vorgesehen sind und daß das Betätigungselement und das Kupplungsteil derart in Wirkverbindung sind, daß das Betätigen des Betätigungselementes zum Festlegen der Klemme oder des Klemmeinsatzes an dem länglichen Körper auch das Kupplungsteil zum Verbinden der beiden Schenkel betätigt.

Es kann also an dem ersten Schenkel der winkelförmigen Leitungseinführung eine beliebige, aus dem Stand der Technik bekannte Klemmeinrichtung in Form einer Klemme oder eines Klemmeinsatzes vorgesehen sein, wie sie zum Festlegen oder zur Zugentlastung an solchen länglichen Körpern, insbesondere an Wellschläuchen oder Kabeln bekannt sind. In zweckmäßiger und vorteilhafter Weise kann dabei die Betätigung einer solchen Klemmeinrichtung beziehungsweise eines dazu vorhandenen Betätigungselementes gleichzeitig dazu verwendet werden, die Kupplungsverbindung zwischen den beiden im Winkel zueinander anzuordnenden Schenkeln der winkelförmigen Leitungseinführung herzustellen. Somit kann also der Vorgang des Festlegens oder Verklemmens des länglichen.Körpers automatisch zur gegenseitigen Kupplung, Verbindung oder Verriegelung der beiden Winkel-Schenkel verwendet werden. Dadurch wird die Handhabung des Verriegelns oder Kuppelns einerseits und des Befestigens des länglichen Körpers oder Kabels andererseits für den Benutzer erheblich vereinfacht. Darüber hinaus ergibt sich durch diese Koppelung der Bewegung des Betätigungselementes für den Klemmvorgang und für die Verkuppelung auch die Möglichkeit, im umgekehrten Falle bei der Demontage nicht nur den länglichen Körper wieder freizugeben, sondern auch die Kupplung zwischen den beiden Schenkeln wieder zu lösen.

Besonders zweckmäßig ist es dabei, wenn das Betätigungselement für die Klemme oder dem Klemmeinsatz mit dem Kupplungsteil reibschlüssig verbunden ist. Dadurch besteht die Möglichkeit, das Betätigungselement für eine Verstärkung der Verklemmung noch weiter zu bewegen, wenn auch schon die Kupplungsposition zwischen den beiden Schenkeln erreicht ist, wobei dann bei dieser Weiterbewegung lediglich die Reibkraft überwunden werden muß. Bei einer entgegengesetzten Bewegung kann hingegen dann dieser Reibschluß auch zum Lösen der Kupplung zwischen den beiden Schenkeln ausgenutzt werden.

Eine besonders günstige konstruktive Ausgestaltung der erfindungsgemäßen winkelförmigen Leitungseinführung kann dadurch gekennzeichnet sein, daß in oder an dem ersten von der Wandung oder dem Gehäuse abgewandten Schenkel eine in radialer Richtung verformbare Klemme oder ein radial verformbarer Klemmeinsatz zum Befestigen des länglichen Körpers im Bereich dieses ersten Schenkels und als Betätigungselement dafür eine Drehhülse oder Überwurfmutter und ferner an der Übergangs- oder Berührstelle zwischen diesem ersten Schenkel und dem zweiten Schenkel an dem ersten Schenkel als Kupplungsteil ein Drehriegel vorgesehen sind, daß der Drehriegel in Kupplungsposition einen an dem mit der Wandung oder dem Gehäuse verbindbaren zweiten Schenkel angeordneten, als Gegenkupplungsteil dienenden Vorsprung hintergreift und daß der Drehriegel und die Drehhülse oder Überwurfmutter über eine Reibkupplung reibschlüssig derart verbunden sind, daß beim Verdrehen der Drehhülse oder Überwurfmutter in ihre Klemmstellung der Drehriegel in seine Kupplungs- öder Sperrstellung mitführbar ist.

In diesem Falle wird also eine Klemme oder ein Klemmeinsatz vorgesehen, welche in radialer Richtung mittels einer Drehhülse oder Überwurfmutter verformbar sind, das heißt durch eine Schraubbewegung und an sich bekannte konischen Flächen können Klemmfinger der Klemme oder des Klemmeinsatzes mit Hilfe der übergreifenden Drehhülse oder Überwurfmutter aufgrund deren Axialbewegung auch in radialer Richtung verformt und gegen einen länglichen Körper angepreßt oder an einem Wellschlauch in Eingriff gebracht werden, wie es in vielfältiger Form aus dem Stand der Technik auch für sogenannte Kabelverschraubungen oder Schlauchverschraubungen bekannt ist. In konstruktiv einfacher und somit vorteilhafter Weise wird dabei die Wirkverbindung mit dem Kupplungsteil zum Verbinden der beiden Schenkel dadurch erreicht, daß ein Drehriegel vorgesehen ist, mit welchem die Drehhülse oder Überwurfmutter über eine Reibkupplung reibschlüssig verbunden ist, so daß ein derartiger Drehriegel beim Verklemmen des länglichen Körpers aufgrund dieses Reibschlusses in Drehrichtung mitgenommen wird, bis die Sperr- oder Kupplungsposition erreicht ist. In zweckmäßiger Weise kann dann aber erforderlichenfalls die Drehhülse oder Überwurfmutter weiterverdreht werden, indem lediglich die Reibkraft einerseits und die zunehmende Klemmkraft andererseits überwunden werden, falls das Festlegen des länglichen Körpers einer weiteren Verschraubung der Drehhülse oder Überwurfmutter bedarf. Umgekehrt genügt es, die Drehhülse oder Überwurfmutter in entgegengesetzter Richtung zurückzudrehen, um gleichzeitig über den Reibschluß den Drehriegel wieder in Offenstellung zu bringen, also die beiden Schenkel voneinander zu lösen, wenn auch der längliche Körper wieder aus seiner Verklemmung befreit wird. Somit ergibt sich eine sehr einfache und effektive doppelte Funktion der Drehhülse oder Überwurfmutter und gleichzeitig eine einfache Betätigung beim Verbinden der beiden Schenkel in ihrer winkligen Position relativ zueinander und beim Festlegen eines länglichen Körpers, Schlauches oder Kabels.

Zweckmäßig kann dabei sein, wenn an dem ersten Schenkel ein Anschlag für einen Verriegelungsvorsprung des Drehriegels des ersten Schenkels vorgesehen ist, der dessen Bewegung oder Verdrehung in der Verriegelungslage gegenüber dem Betätigungselement oder der Drehhülse oder Überwurfmutter begrenzt, und wenn das Betätigungselement zum Verklemmen des länglichen Körpers über einen größeren Weg oder Drehwinkel als das Kupplungsteil oder der Drehriegel bewegbar ist. Ein solches Kupplungsteil, insbesondere ein Drehriegel braucht nämlich von einer offenen in eine Sperr- oder Kupplungsposition nur um einen relativ geringen Winkel verdrehbar zu sein, während für ein Verklemmen eines länglichen Körpers unter Umständen eine größere oder sogar mehrere Umdrehungen an einer entsprechenden Drehhülse oder Überwurfmutter zweckmäßig sind, insbesondere zur Berücksichtigung auch unterschiedliche Querschnitte oder Durchmesser aufweisender länglicher Körper. Es ergibt sich durch die erfindungsgemäße Anordnung eine Koppelung der beiden Bewegungen zum Verbinden einerseits der beiden Schenkel aneinander und andererseits des länglichen Körpers in dem ersten Schenkel, ohne daß dabei aber die eine Drehbewegung die andere begrenzt.

Eine weitere Ausgestaltung der Erfindung von erheblicher Bedeutung kann darin bestehen, daß im Bereich des Anschlages für einen Verriegelungsvorsprung ein von dem Drehriegel in Kupplungsposition mittels eines Rastzahnes hintergriffener Rastvorsprung angeordnet ist und daß die Reibung zwischen dem.Betätigungselement - also insbesondere einer Drehhülse oder einer Überwurfmutter - und dem Drehriegel größer als die beim Einschwenken des Drehriegels in dessen den Rastvorsprung hintergreifende Sperrposition auftretende Gegenkraft ist. Dadurch kann erreicht werden, daß beim Verdrehen des Betätigungselementes, also der Drehhülse oder Überwurfmutter, zunächst die Verriegelung der beiden Winkelschenkel erfolgt und das Verklemmen erst in verriegelter und gleichzeitig auch verrasteter Position des Drehriegels beginnt, wenn das Betätigungselement dann weitergedreht wird, um auch die Klemmkraft aufzubringen.

Eine Weiterbildung kann dabei vorsehen, daß der beim Verdrehen des Drehriegels in Sperrstellung überwindbare Rastvorsprung der Rückverdrehung in Löseposition eine größere Widerstandskraft entgegensetzt als das Lösen des Betätigungselementes, insbesondere der Drehhülse oder Überwurfmutter aus der Klemmposition. Rastvorsprünge lassen sich bekanntermaßen so gestalten, daß sie in der einen Richtung als in der Gegenrichtung überwunden werden können. Durch die erwähnte zusätzliche Maßnahme ergibt sich, daß bei der entgegengesetzten Betätigung des Betätigungselementes aus der Klemm- und Halteposition in Offenstellung zunächst die Befestigung oder Klemmung des länglichen Körpers oder Kabels aufgehoben wird, bevor die beiden Schenkel der winkelförmigen Leitungseinführung wieder voneinander gelöst, entkuppelt oder entriegelt werden. Somit kann unter Umständen auch nur die Verklemmung gelöst werden, ohne die beiden Schenkel auszukuppeln. Soll jedoch nach dem Lösen der Klemmung auch eine Entriegelung erfolgen, braucht das Betätigungselement nur mit etwas erhöhter Kraft in Öffnungsrichtung weiterbewegt oder weitergedreht werden, um diese Rastung in Löserichtung zu überwinden und damit auch den Drehriegel in Offenstellung zu bringen.

Weitere Ausgestaltungen der erfindungsgemäßen Leitungseinführungen ergeben sich aus den Ansprüchen 7 bis 10.

Anspruch 7 betrifft dabei eine zweckmäßige Ausgestaltung des Anschlages an dem Winkelschenkel zur Begrenzung der Bewegung des Drehriegels in Verbindung mit einer Verrastung in der Kupplungsposition.

Anspruch 8 enthält eine besonders zweckmäßige Ausgestaltung des Drehriegels selbst als Ring beziehungsweise ringförmige Scheibe mit einer stutzenförmigen Drehlagerung, die gleichzeitig die erwähnte Reibverbindung mit der Drehhülse oder Überwurfmutter herstellen kann.

Anspruch 9 enthält eine besonders zweckmäßig gegenseitige Zuordnung der reibschlüssigen Verbindung zwischen Drehhülse oder Überwurfmutter und an dem scheibenförmigen Drehriegel angeordnetem Stutzen.

Anspruch 10 enthält eine Maßnahme, die an einem von einem Gehäuse oder einer Wandung abliegenden Stutzen eine Klemmvorrichtung erlaubt, bei der die Drehrichtung für die Schließ- oder Klemmbewegung in der üblichen Richtung erfolgen kann, wozu dann aber ein Linksgewinde erforderlich ist.

Insgesamt ergibt sich vor allem bei Kombination einzelner oder mehrerer der vorbeschriebenen und in den Ansprüchen enthaltenen Merkmale und Maßnahmen eine winkelförmige Leitungseinführung, bei welcher die beiden Schenkel dieser Leitungseinführung lösbar kuppelbar sind und die Kupplungsbewegung mit der zum Festlegen oder Verklemmen der Leitung oder des länglichen Körpers erforderlichen Bewegung automatisch durchgeführt werden kann, wobei aber das Festlegen und Lösen des länglichen Körpers auch ohne ein Lösen der Kupplung zwischen den beiden Schenkeln erfolgen kann.

Nachstehend ist ein Ausführungsbeispiel der Erfindung anhand der Zeichnung näher beschrieben.
Es zeigt in zum Teil schematisierter Darstellung:

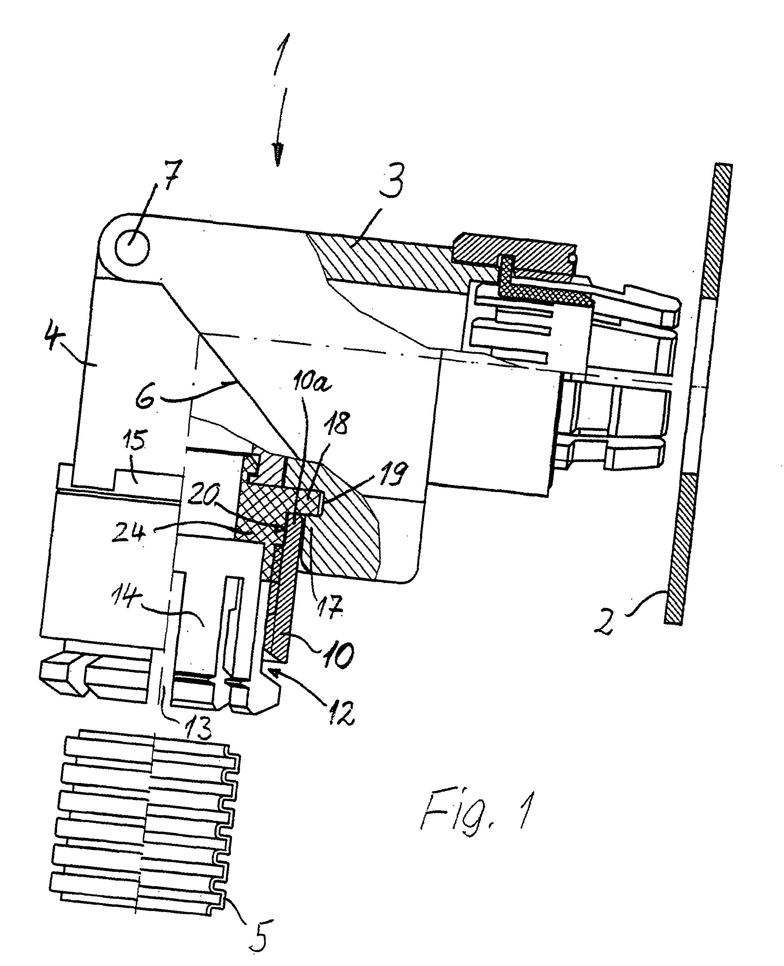

- Fig.1: eine teilweise aufgebrochen und im Bereich dieser Aufbrechung im Längsschnitt gehaltene Seitenansicht einer erfindungsgemäßen winkelförmigen Leitungseinführung mit zwei im Winkel zueinander stehenden Schenkeln zum Einführen und Befestigen von biegsamen länglichen Körpern, im Ausführungsbeispiel eines Wellschlauches, an einer Wandung oder einem Gehäuse mit einem Durchbruch vor dem Verrasten und Verklemmen mit dem Durchbruch in einer Gehäusewand und vor dem Einfügen oder Festlegen des Schlauches an dem der Gehäusewand abgewandten Schenkel, wobei die beiden um eine Achse relativ zueinander schwenkbaren Schenkel in die Gebrauchsstellung geschwenkt und in dieser miteinander lösbar gekuppelt oder verbunden sind,
- Fig.2: eine der Figur 1 entsprechende Darstellung der winkelförmigen Leitungseinführung nach dem Befestigen an einem Durchbruch der Wandung mit einem Schenkel und nach dem Befestigen eines Wellschlauches an und innerhalb des zweiten Schenkels,
- Fig.3: eine Seitenansicht der winkelförmigen Leitungseinführung nach dem Lösen der Kupplung zwischen den beiden Schenkeln und dem Auseinanderklappen in eine Lage, in welcher die beiden Schenkel an ihrer gemeinsamen Schwenkachse befestigt sind, aber eine übereinstimmende Richtung haben, also miteinander fluchten, so daß ein durch die gesamte Leitungseinführung zu legendes Kabel oder dergleichen geradlinig in beide Schenkel eingeführt werden könnte,
- Fig.4: eine Ansicht der Leitungseinführung bei miteinander fluchtenden Schenkeln mit Blick auf die in Gebrauchsstellung sich berührenden Flächen in Blickrichtung des Pfeiles A in Figur 3,
- Fig. 5: eine Draufsicht der Anordnung gemäß Figur 3 mit Blickrichtung in Richtung des Pfeiles B in Figur 3,
- Fig.6: eine schaubildliche Ansicht schräg auf den Befestigungsbereich des einen Schenkels, welcher Befestigungsbereich zum Festlegen eines Wellschlauches oder dergleichen vorgesehen und mit zusammendrückbaren Klemmfingern versehen ist und gleichzeitig mit Blick auf einen dazu koaxialen Drehriegel, wobei auch in dieser Darstellung beide Schenkel der winkelförmigen Leitungseinführung gemäß Figur 3 so auseinander geklappt sind, daß ihre Innenlängshöhlungen miteinander fluchten, sowie
- Fig.7: eine schaubildliche Explosionsdarstellung der winkelförmigen Leitungseinführung im wesentlichen von der Seite und etwas schräg von der zum Einführen in eine Lochung eines Gehäuses vorgesehenen Seite aus etwa gemäß Figur 3.

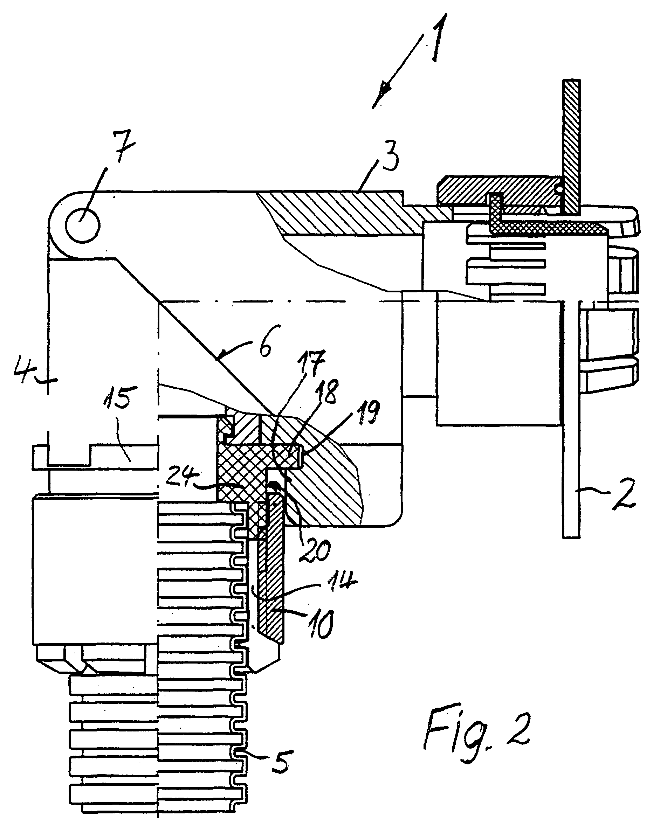

Eine im ganzen mit 1 bezeichnete Leitungseinführung weist im wesentlichen zwei im Winkel zueinander stehende Schenkel, nämlich einerseits einen an einer Wandung 2 oder einem diese Wandung 2 aufweisenden Gehäuse anbringbaren und festlegbaren zweiten Schenkel 3 und einen in Gebrauchsstellung dazu rechtwinkligen ersten Schenkel 4 zum Einführen und/oder Befestigen von biegsamen länglichen Körpern, im Ausführungsbeispiel einem Wellschlauch 5 unter einem Winkel in, durch oder an der Wandung 2 oder dem Gehäuse auf. Dabei ist in den Figuren 1 und 2 erkennbar, daß der Wellschlauch 5 nur an dem ersten Schenkel 4 in dessen Innenlängshöhlung befestigt wird, so daß durch ihn und die Leitungseinführung 1 hindurch eventuell auch noch ein Kabel verlegt werden könnte. Es ist aber auch möglich von vorneherein ein Kabel mit dieser Leitungseinführung 1 an einer Wandung 2 zu befestigen und durch sie hindurchzuführen und dabei mit Hilfe der Leitungseinführung 1 und dem ersten Schenkel 4 eine Zugentlastung zu bewirken.

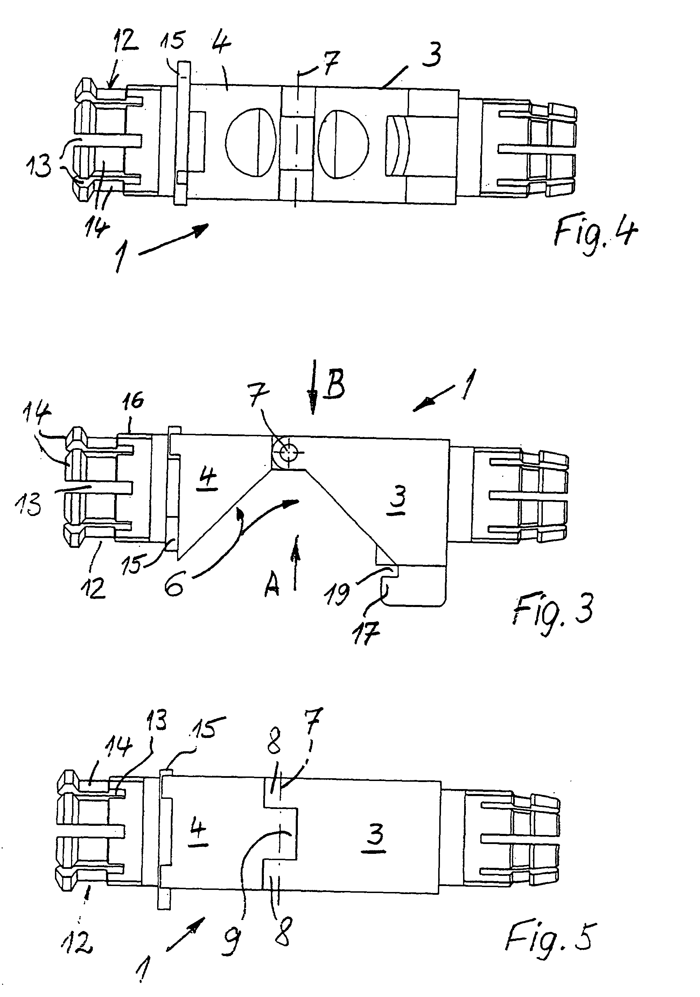

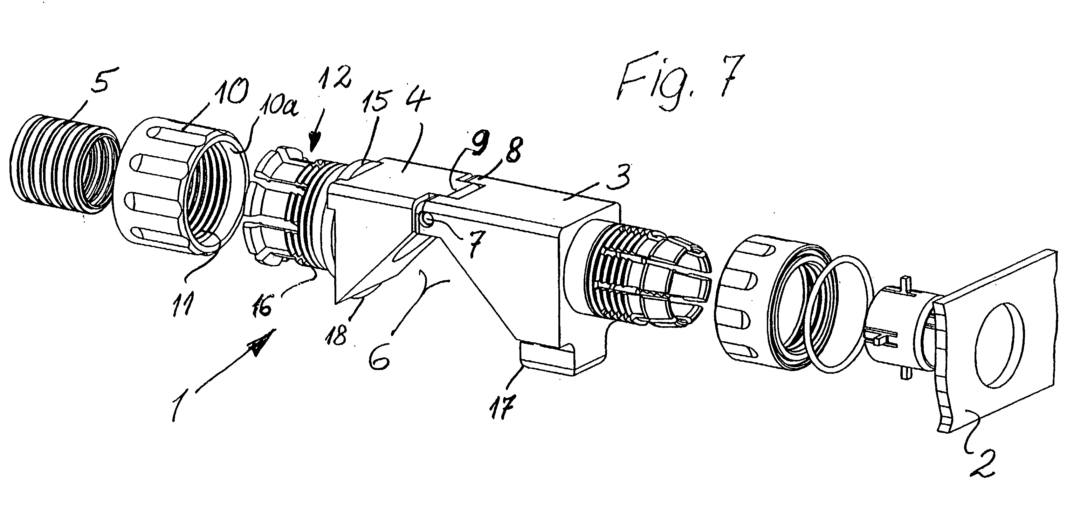

Gemäß Figur 2 verläuft dabei der längliche Körper, also der Wellschlauch 5, etwa parallel zur Oberfläche der Wandung 2, während die Fortsetzung durch die Leitungseinführung 1 hindurch, also beispielsweise ein dort durch den ersten und zweiten Schenkel eingeführtes Kabel und dem Ausführungsbeispiel in jedem Fall der zweite Schenkel 3 rechtwinklig in diese eintritt. Der Biegebereich eines solchen länglichen Körpers, der durch die gesamte Leitungseinführung verläuft, wird dabei von dieser Leitungseinführung 1 umschlossen und im Winkelbereich dieser winkelförmigen Leitungseinführung 1 ist eine Trennstelle 6 zwischen deren beiden Schenkeln 3 und 4 vorgesehen, die man besonders deutlich in Figur 3 und 7 erkennt, weil die.beiden Schenkel 3 und 4 an der Außenseite des von ihnen gebildeten Winkels mittels einer außerhalb ihrer Längsmitte quer zu den Mittelachsen dieser Schenkel 3 und 4 verlaufenden Querachse 7 schwenkbar miteinander verbunden und an der Innenseite des Winkels bei geschlossener Trennstelle 6 gemäß Figur 1 und 2 in noch zu beschreibender Weise lösbar kuppelbär sind.

Die winkelförmige Leitungseinführung 1 kann also aus dieser Gebrauchsstellung gemäß Figur 1 und 2, in welcher ihre beiden Schenkel 3 und 4 im Winkel zueinander stehen und miteinander verbunden sind, auch nach dem Lösen der Kupplung zwischen den beiden Schenkeln 3 und 4 in eine Lage geschwenkt werden, bei welcher die beiden Schenkel 3 und 4 gemäß Figur 3 bis 7 mit ihren Innenlängshöhlungen fluchten, welche Innenlängshöhlungen dabei im Bereich der Trennstelle 6 getrennt sind, wobei im Bereich dieser Trennstelle 6 außerdem seitlich der Innenlängshöhlungen die Querachse 7 für diese Verschwenkung verläuft. In Figur 5 ist dabei die Verbindung der beiden Schenkel 3 und 4 im Bereich der Querachse 7 erkennbar, welche etwa scharnierartig ausgebildet ist. Diese Scharnierverbindung ist außerdem gut in Figur 7 erkennbar, wonach von dem zweiten Schenkel 3 Vorsprünge 8 beidseits eines zwischen sie greifenden Gegenvorsprunges 9 des ersten Schenkels 4 angeordnet und alle Vorsprünge 8 und 9 von der Querachse 7 durchsetzt sind.

An dem ersten, von der Wandung 2 beabstandeten Schenkel 4 ist eine durch ein Betätigungselement 10, im Ausführungsbeispiel eine mit einem Innengewinde 11 versehene Drehhülse oder Mutter, im folgenden deshalb auch "Drehhülse 10" genannt, verstellbare Klemme 12 für den länglichen Körper oder Schlauch 5 vorgesehen, welche Klemme 12 durch einzelne durch Axialschlitze 13 getrennte Klemmfinger 14 gebildet ist, aber auch insgesamt als Klemmeinsatz gestaltet sein könnte, welcher Klemmeinsatz ein loses oder mit dem Schenkel 4 verbundenes Teil sein könnte.

Der Schenkel 4 weist außerdem ein noch näher zu beschreibendes Kupplungsteil - im Ausführungsbeispiel einen Drehriegel 15 - auf, der zum lösbaren Verbinden mit dem zweiten Schenkel 3 dient, wenn die beiden Schenkel 3 und 4 im Bereich ihrer Trennstelle 6 gemäß den Figuren 1 und 2 aneinander liegen. In noch zu erläuternder Weise sind dabei das Betätigungselement 10 und das als Drehriegel 15 ausgebildete Kupplungsteil derart in Wirkverbindung miteinander, daß das Betätigen des Betätigungselementes 10 zum Festlegen der Klemme 12, also zum Fixieren des Wellschlauches 5 in der Gebrauchsstellung gemäß Figur 2, gleichzeitig oder zeitlich versetzt auch das Kupplungsteil, also den Drehriegel 15, im Sinne einer Verbindung der beiden Schenkel 3 und 4 betätigt. Im folgenden wird näher erläutert, daß also das Verdrehen der Drehhülse 10 und deren aufgrund des Gewindes 11 dadurch bewirkte Axialbewegung nicht nur die Klemmfinger 14 radial verformt, sondern auch den Drehriegel 15 in Drehrichtung mitnimmt, um ihn in eine Position zu bringen, in der die beiden Schenkel 3 und 4 formschlüssig über diesen Drehriegel 15 verbunden sind.

Dabei ist das Betätigungselement 10 für die Klemme 12 - oder einen gegebenenfalls andersartig gestalteten Klemmeinsatz - mit dem Kupplungsteil reibschlüssig verbunden, das heißt zwischen diesen beiden Teilen besteht eine Reibkupplung.

Vor allem bei gemeinsamer Betrachtung der Figuren 1, 2 und 7 wird deutlich, daß an dem ersten, von der Wandung 2 oder dem Gehäuse abgewandten Schenkel 4 die in radialer Richtung verformbare Klemme 12 praktisch als Ende dieses Schenkels 4 zum Verbinden mit dem Wellschlauch 5 oder zum Verklemmen mit einem sonstigen länglichen Körper und als Betätigungselement dafür die mit dem Innengewinde 11 an einem Außengewinde 16 der Klemme 12 angreifende Drehhülse und ferner an der Übergangs- oder Berührstelle 6 zwischen diesem ersten Schenkel 4 und dem zweiten Schenkel 3 an dem ersten Schenkel 4 als Kupplungsteil der schon erwähnte Drehriegel 15 vorgesehen sind.

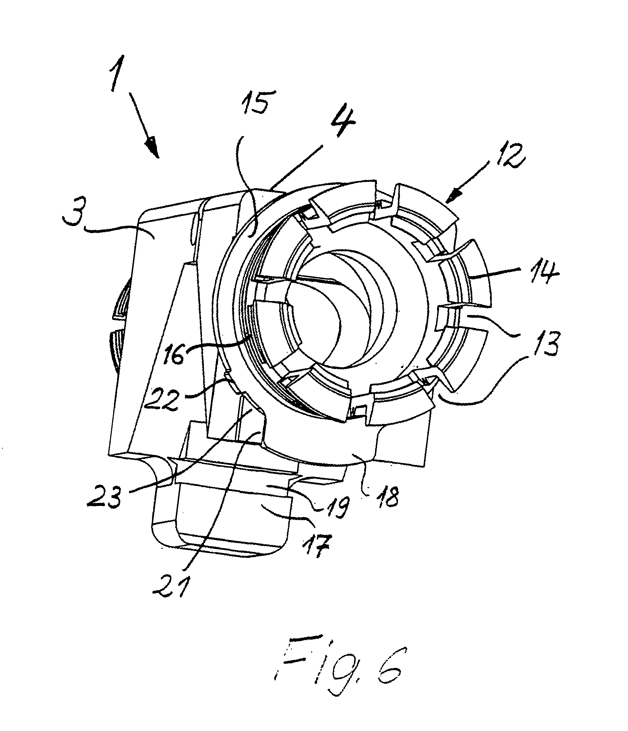

An dem mit der Wandung 2 verbindbaren oder verbundenen zweiten Schenkel 3 ist als Gegenkupplungsteil ein Vorsprung 17 vorgesehen, welchen der Drehriegel 15 in Kupplungsposition gemäß Fig.1 und 2 mit einem radial vorstehenden Verriegelungsvorsprung 18 hintergreift. Dieser die Gegenkupplung bildende Vorsprung 17 an dem zweiten Schenkel 3 ist dabei die äußere Begrenzung einer nutenförmigen Aussparung 19, die man besonders gut in Fig.6 erkennt. Ebenso erkennt man auch in Fig.6 deutlich den an dem Drehriegel 15 befindlichen Verriegelungsvorsprung 18, der radial gegenüber dem übrigen Drehriegel 15 übersteht, um in die Aussparung 19 hinter dem Vorsprung 17 eingreifen zu können.

Der Drehriegel 15 und die Drehhülse 10 sind dabei über eine etwa zylinderförmige, beispielsweise in Fig.1 und 2 erkennbare zylinderförmige Reibkupplung 20 reibschlüssig verbunden, so daß der schon erwähnte Effekt auftritt, daß beim Verdrehen der Drehhülse 10 in ihre Klemmstellung der Drehriegel 15 in seine Kupplungs- oder Sperrstellung mitführbar ist. Dabei ist die Reibung so gewählt, daß die Kupplungsbewegung vor der Klemmbewegung erfolgt. Damit umgekehrt die Lösung der Klemmung vor oder ohne eine Entriegelung der Kupplung zwischen den beiden Schenkeln 3 und 4 erfolgen kann, sind nachfolgend noch erläuterte weitere Maßnahmen vorgesehen.

Vor allem Fig. 6 zeigt in Verbindung mit weiteren Figuren, daß an dem erstem Schenkel 4 ein Anschlag 21 für den bereits erwähnten Verriegelungsvorsprung 18 des Kupplungsteiles oder Drehriegels 15 des ersten Schenkels 3 vorgesehen ist, wobei in Fig.6 die Position des Drehriegels 15 dargestellt ist, in welcher sein Verriegelungsvorsprung 18 an diesem Anschlag 21 in Drehrichtung derart anliegt, daß eine weitere Verdrehung des Drehwinkels - bei der gewählten Darstellungsweise im Uhrzeigersinn - nicht möglich ist. In dieser Position würde der Verriegelungsvorsprung 18 gleichzeitig in die Aussparung 19 eingreifen, wenn die beiden Schenkel 3 und 4 zuvor in ihre Gebrauchsstellung aufeinander zu geklappt worden wären.

Der Anschlag 21 begrenzt also die Bewegung oder Verdrehung des Drehriegels 15 in der Verriegelungslage gegenüber dem Betätigungselement, also der Drehhülse 10, die noch weiterverdreht werden kann, um den länglichen Körper festzulegen oder zu verklemmen, weil sie nur reibschlüssig an dem Drehriegel 15 angreift und diese Reibung bei der weiteren Verdrehung überwunden werden kann. Die Drehhülse 10 hat also einen größeren Drehwinkel als der Drehriegel 15.

Im Bereich des Anschlages 21 für den Verriegelungsvorsprung 18 ist außerdem ein von dem Drehriegel 15 in Kupplungsposition mittels eines Rastzahnes 22 hintergriffener Rastvorsprung 23 angeordnet, wobei der Rastzahn 22 in Umfangsrichtung gegenüber dem Verriegelungsvorsprung 18 einen Abstand hat, der der Ausdehnung des Rastvorsprunges 23 in dieser Richtung entspricht, so daß in der Verriegelungsposition der Rastvorsprung 23 zwischen dem Rastzahn 22 und dem Verriegelungsvorsprung 18 zu liegen kommt, wie es deutlich in Fig.6 erkennbar ist.

Dabei zeigt Fig.6 außerdem, daß im Ausführungsbeispiel der an dem ersten Winkelschenkel 4 fest angeordnete Anschlag 21 zum Begrenzen der Drehbewegung des Drehriegels 15 und des demgegenüber radial vorstehenden Verriegelungsvorsprunges 18 gleichzeitig als Rastvorsprung 23 ausgebildet ist und eine derartige radiale Abmessung hat, daß der am Umfang des Drehriegels 15 in Drehrichtung vor dessen radial vorspringendem Verriegelungsvorsprung 18 befindlicher Rastzahn 22 an dem Rastvorsprung 23 rastend vorbeibewegbar ist. Man erkennt deutlich, daß der Rastzahn 22 des Drehriegels 15 nur relativ geringfügig in radialer Richtung vorsteht, so daß der Rastvorsprung 23 bei einer Verdrehung überwunden werden kann, um die Rastposition einzunehmen. Dabei ist die Reibung zwischen dem Betätigungselement bzw. der Drehhülse 10 und dem Drehriegel 15 größer als die beim Einschwenken des Drehriegels 15 in dessen den Rastvorsprung 23 hintergreifende Sperrposition auftretende Gegenkraft. Umgekehrt verhindert diese Verrastung beim Lösen der Klemmfinger 14 aus ihrer Halteposition, daß die beiden Schenkel 3 und 4 entkuppelt werden. Der beim Verdrehen des Drehriegels 15 in Sperrstellung überwindbare Rastvorsprung 23 setzt nämlich der Rückverdrehung in Löseposition eine größere Widerstandskraft entgegen, als sie durch das Lösen des Betätigungselementes oder der Drehhülse 10 aus deren Klemmposition auftritt.

Fig.6 verdeutlicht dabei, daß dieser Drehriegel 15 insgesamt als etwa ringförmige Scheibe ausgebildet ist, an deren Umfang der Verriegelungsvorsprung 18 - und in diesem Ausführungsbeispiel auch der Rastzahn 22 - radial vorsteht, während aus Fig.1 und 2 hervorgeht, daß diese den Drehriegel 15 bildende Scheibe im Bereich ihrer Drehlagerung einen sich auch axial erstreckenden Stutzen 24 hat, der sich dabei beidseits der eigentlichen ringförmigen Scheibe dieses Drehriegels 15 erstreckt, um einerseits im Inneren des ersten Schenkels 4 eine Befestigung durch eine Verrastung zu erzielen, während vor allem der wesentliche Teil dieses Stutzens 24 in axialer Richtung zum Ende dieses Schenkels 4 gerichtet ist. Daran greift ein Endbereich 10a der Drehhülse 10 reibend an, so daß das Verdrehen der Drehhülse 10 auch bei einer damit einhergehenden gewissen Axialverstellung diesen Stutzen 24 und damit den Drehriegel 15 soweit mitnimmt, bis der Anschlag 22 eine weitere Verdrehung unterbindet. Die Drehhülse 10 ist dann gegenüber dieser Sperrstellung des Drehriegels 15 dennoch weiterverdrehbar, wobei lediglich die Reibkraft zwischen dem Endbereich 10a und dem Stutzen 24 überwunden werden muß.

Der Endbereich 10a der Drehhülse 10 nimmt dabei den Stutzen 24 im Bereich der gegenseitigen reibschlüssigen Verbindung in sich auf und beaufschlagt ihn also außenseitig. Denkbar wäre allerdings auch eine umgekehrte Anordnung, bei welcher ein entsprechender Ringbereich der Drehhülse 10 in einen dazu passenden Bereich des Stutzens 24 reibschlüssig eingreift.

Die im Ausführungsbeispiel verwendete Schraubhülse 10 wird zum radialen Verformen der Klemmfinger 14 in axialer Richtung von der gemeinsamen Verbindungsstelle der beiden Winkelschenkel 3 und 4 wegbewegt, um die über konische Flächen sich radial vergrößernden Klemmfinger dadurch einwärts zu verbiegen. Dabei ist im Ausführungsbeispiel vorgesehen, daß die für diese Verdrehung und damit auch die Verdrehung des Drehriegels 15 in dessen Sperrstellung eine Bewegung im Uhrzeigersinn erfolgt, wenn von der Öffnung des Schenkels 4 aus auf diesen geblickt wird. Demgemäß ist das Gewinde 16 ein Linkgsgewinde.

Die Form dieser Klemmfinger 14 hat dabei den Vorteil, daß sie bei einem Zurückverstellen der Dreh- oder Schraubhülse 10 von den Enden dieser Klemmfinger 14 weg auch radial nach außen ausweichen können, um den Wellschlauch 5 wieder herausziehen zu können.

An dem zweiten Schenkel 3 ist hingegen eine Klemmvorrichtung angeordnet, bei welcher die dort vorgesehenen Klemmfinger in Gebrauchsstellung radial nach außen bewegt werden, damit sie mit entsprechenden außenliegenden Vorsprüngen die Lochung in der Wand 2 gemäß Fig.2 hintergreifen können.

Die winkelförmige Leitungseinführung 1 weist zwei im Winkel zueinanderstehende Schenkel 3 und 4 auf und dient zur Befestigung an einer Wandung 2 oder einem Gehäuse im Bereich eines entsprechenden lochförmigen Durchbruches. Damit können längliche Körper, beispielsweise Schläuche 5 oder Kabel oder dergleichen an oder durch diese Wandung 2 geführt und festgelegt werden, wobei der entsprechende längliche Körper in den ersten Schenkel 4 eintritt, während der zweite Schenkel 3 selbst mit dem Gehäuse oder dessen Wandung 2 verbunden ist. Im Winkelbereich können die beiden Schenkel 3 und 4 relativ zueinander verschwenkt werden, so daß sie auch eine fluchtende Lage einnehmen können.

Die Verriegelung in winkelförmiger Gebrauchsstellung ist mit einer Bewegung zum Befestigen des länglichen Körpers zumindest in dem ersten Schenkel 4 derart gekoppelt, daß beide Bewegungen mit demselben Betätigungselement durchgeführt werden können. Die Trennstelle 6 zwischen den beiden Schenkeln kann dabei etwa auf einer Winkelhalbierenden zwischen diesen beiden Schenkeln verlaufen.

## Patentansprüche

1. Winkelförmige Leitungseinführung (1) mit zwei im Winkel zueinanderstehenden Schenkeln (3, 4) zum Einführen und/oder Befestigen von länglichen Körpern, z.B. von elektrischen Leitungen, Kabeln oder von Schläuchen (5), unter einem Winkel in, durch oder an einer Wandung oder einem Gehäuse, wobei der längliche Körper schräg oder parallel zur Oberfläche der Wandung (2) verläuft und insbesondere etwa rechtwinklig oder schräg in diese eintritt und wobei im Winkelbereich der winkelförmigen Leitungseinführung (1) eine Trennstelle (6) zwischen deren beiden Schenkeln (3,4) vorgesehen ist, wobei die beiden Schenkel (3,4) an der Außenseite. des von ihnen gebildeten Winkels schwenkbar und/oder lösbar verbunden und an der Innenseite des Winkels lösbar kuppelbar sind, **dadurch gekennzeichnet, daß** an oder in einem ersten von der Wandung (2) oder dem Gehäuse abliegenden Schenkel (4) eine durch ein Betätigungselement (10) verstellbare Klemme (12) oder ein Klemmeinsatz für den länglichen Körper und ein Kupplungsteil zum lösbaren Verbinden mit den zweiten Schenkel (3) vorgesehen sind und daß das Betätigungselement (10) und das Kupplungsteil derart in Wirkverbindung sind, daß das Betätigen des Betätigungselementes (10) zum Festlegen der Klemme (12) oder des Klemmeinsatzes an dem länglichen Körper auch das Kupplungsteil zum Verbinden der beiden Schenkel (3,4) betätigt.

2. Leitungseinführung nach Anspruch 1, **dadurch gekennzeichnet, daß** das Betätigungselement (10) für die Klemme (12) oder den Klemmeinsatz mit dem Kupplungsteil reibschlüssig verbunden ist.

3. Winkelförmige Leitungseinführung nach Anspruch 1 oder 2, **dadurch gekennzeichnet, daß** in oder an dem ersten, von der Wandung (2) oder dem Gehäuse abgewandten Schenkel (4) eine in radialer Richtung verformbare Klemme (12) oder ein Klemmeinsatz zum Befestigen oder Verbinden des länglichen Körpers im Bereich dieses ersten Schenkels (4) und als Betätigungselement dafür eine Drehhülse (10) oder Überwurfmutter und ferner an der Übergangs- oder Berührstelle zwischen diesem ersten Schenkel (4) und dem zweiten Schenkel (3) an dem ersten Schenkel (4) als Kupplungsteil ein Drehriegel (15) vorgesehen sind, daß der Drehriegel (15) in Kupplungsposition einen an dem mit der Wandung (2) oder dem Gehäuse verbindbaren zweiten Schenkel (3) angeordneten, als Gegenkupplungsteil dienenden Vorsprung (17) hintergreift und daß der Drehriegel (15) und die Drehhülse (10) oder Überwurfmutter über eine Reibkupplung (20) reibschlüssig derart verbunden sind, daß beim Verdrehen der Drehhülse (10) oder Überwurfmutter in ihre Klemmstellung der Drehriegel (15) in seine Kupplungs- oder Sperrstellung mitführbar ist.

4. Leitungseinführung nach einem der Ansprüche 1 bis 3, **dadurch gekennzeichnet, daß** an dem ersten Schenkel (4) ein Anschlag (21) für einen Verriegelungsvorsprung (18) des Kupplungsteiles oder Drehriegels (15) vorgesehen ist, der dessen Bewegung oder Verdrehung in der Verriegelungslage gegenüber dem Betätigungselement oder der Drehhülse (10) oder Überwurfmutter begrenzt, und daß das Betätigungselement zum Verklemmen des länglichen Körpers über einen größeren Weg oder Drehwinkel als das Kupplungsteil oder der Drehriegel (15) bewegbar ist.

5. Leitungseinführung nach einem der Ansprüche 1 bis 4, **dadurch gekennzeichnet, daß** im Bereich des Anschlages (21) für einen Verriegelungsvorsprung (18) ein von dem Drehriegel (15) in Kupplungsposition mittels eines Rastzahnes (22) hintergriffener Rastvorsprung (23) angeordnet ist und daß die Reibung zwischen dem Betätigungselement und dem Drehriegel (15) größer als die beim Einschwenken des Drehriegels (15) in dessen den Rastvorsprung (23) hintergreifende Sperrposition auftretende Gegenkraft ist.

6. Leitungseinführung nach einem der Ansprüche 1 bis 5, **dadurch gekennzeichnet, daß** der beim Verdrehen des Drehriegels (15) in Sperrstellung überwindbare Rastvorsprung (23) der Rückverdrehung in Löseposition eine größere Widerstandskraft entgegensetzt, als das Lösen des Betätigungselementes, insbesondere der Drehhülse (10) oder Überwurfmutter, aus der Klemmposition.

7. Leitungseinführung nach einem der Ansprüche 1 bis 6, **dadurch gekennzeichnet, daß** der an dem ersten Winkelschenkel (4) fest angeordnete Anschlag (21) zum Begrenzen der Drehbewegung des Drehriegels (15) gleichzeitig als Rastvorsprung (23) dient und eine derartige radiale Abmessung hat, daß ein am Umfang des Drehriegels (15) vor dessen radial vorspringendem Verriegelungsvorsprung (18) befindlicher Rastzahn (22) an dem Rastvorsprung (23) rastend vorbeibewegbar ist.

8. Leitungseinführung nach einem der Ansprüche 1 bis 7, **dadurch gekennzeichnet, daß** der Drehriegel (15) als ringförmige Scheibe ausgebildet ist, an derem Umfang der Verriegelungsvorsprung (18) radial vorsteht und die im Bereich ihrer Drehlagerung einen, sich axial erstreckenden Stutzen (24) hat, an welchem ein Endbereich (10a) der Drehhülse (10) oder Überwurfmutter reibend angreift, in Sperrstellung des Drehriegels (15) aber relativ weiterverdrehbar ist.

9. Leitungseinführung nach Anspruch 8, **dadurch gekennzeichnet, daß** der Endbereich (10a) der Drehhülse (10) oder Überwurfmutter den Stutzen (24) im Bereich der reibschlüssigen Verbindung oder Kupplung (20) in sich aufnimmt und außenseitig beaufschlagt.

10. Leitungseinführung nach einem der Ansprüche 1 bis 9, **dadurch gekennzeichnet, daß** die zum Festlegen des länglichen Körpers oder Kabels dienende Schraubhülse (10) zum Mitnehmen oder Verdrehen des Drehriegels (15) in dessen Sperrstellung von der Öffnung des sie aufweisenden ersten Winkelschenkels (4) aus gesehen im Uhrzeigersinn verdrehbar ist und ein Linksgewinde aufweist.

## Claims

1. Angular lead insertion means (1) having two arms (3, 4) at an angle to each other for inserting and/or securing elongate members, e.g. electric leads, cables or hoses (5), at an angle into, through or along a wall or a housing, wherein the elongate member runs diagonally or parallel to the surface of the wall (2) and enters the latter at right angles or diagonally, in particular, and wherein a break (6) is provided in the angle region of the angular lead insertion means (1), between the two arms (3, 4) thereof, the two arms (3, 4) being pivotally and/or releasably connected on the outside of the angle formed by them and being adapted to be releasably coupled on the inside of the angle, **characterised in that**, on or in a first arm (4) lying away from the wall (2) or the housing, there is a clip (12), or a clamping insert for the elongate member, which can be moved by means of an actuating element (10), and a coupling member for releasably connecting to the second arm (3), and **in that** the actuating element (10) and the coupling member are effectively connected so that the actuation of the actuating element (10) for securing the clip (12) or clamping insert on the elongate member also actuates the coupling member for joining the two arms (3, 4) together.

2. Lead insertion means according to claim 1, **characterised in that** the actuating element (10) for the clip (12) or clamping insert is frictionally connected to the coupling member.

3. Angular lead insertion means according to claim 1 or 2, **characterised in that**, in or on the first arm (4) remote from the wall (2) or housing, there is a radially deformable clip (12) or a clamping insert for securing or connecting the elongate member in the region of this first arm (4) and, as the actuating element therefor, a rotary sleeve (10) or cap nut and also, at the point of transition or contact between this first arm (4) and the second arm (3), a rotary bolt (15) is provided as a coupling member on the first arm (4), **in that** the rotary bolt (15) in the coupling position engages behind a projection (17) acting as a counter-coupling member and provided on the second arm (3) which can be connected to the wall (2) or housing, and **in that** the rotary bolt (15) and the rotary sleeve (10) or cap nut are frictionally connected via a friction coupling (20) so that, as the rotary sleeve (10) or cap nut is turned to its clamping position, the rotary bolt (15) can also be moved into its coupling or locking position.

4. Lead insertion means according to one of claims 1 to 3, **characterised in that** on the first arm (4) is provided a stop (21) for a locking projection (18) of the coupling member or rotary bolt (15), which limits the movement or rotation thereof in the locking position relative to the actuating element or rotary sleeve (10) or cap nut, and **in that** the actuating element is movable over a longer distance or angle of rotation than the coupling member or rotary bolt (15) in order to secure the elongate member.

5. Lead insertion means according to one of claims 1 to 4, **characterised in that**, in the region of the stop (21) for a locking projection (18), there is provided a latching projection (23) behind which the rotary bolt (15) engages with a latching tooth (22) in the coupling position, and **in that** the friction between the actuating element and the rotary bolt (15) is greater than the opposing force produced as the rotary bolt (15) swivels into its locking position engaging behind the latching projection (23).

6. Lead insertion means according to one of claims 1 to 5, **characterised in that** the latching projection (23) which can be overcome when turning the rotary bolt (15) into the locking position prevents it turning back into the release position by means of a resistance which is greater than the releasing of the actuating element, particularly the rotary sleeve (10) or cap nut, from the clamping position.

7. Lead insertion means according to one of claims 1 to 6, **characterised in that** the stop (21) fixedly mounted on the first angle arm (4) for limiting the rotary movement of the rotary bolt (15) simultaneously acts as a latching projection (23) and has a radial dimension such that an engaging tooth (22) located on the circumference of the rotary bolt (15) in front of the radially projecting locking projection (18) thereof can be moved past the engaging projection (23) to latch thereon.

8. Lead insertion means according to one of claims 1 to 7, **characterised in that** the rotary bolt (15) is constructed as an annular disc from whose circumference the locking projection (18) protrudes radially and which has an axially extending support (24) in the region of its rotary bearing, on which an end portion (10a) of the rotary sleeve (10) or cap nut engages with friction, but can be rotated relatively further in the locking position of the rotary bolt (15).

9. Lead insertion means according to claim 8, **characterised in that** the end region (10a) of the rotary sleeve (10) or cap nut accommodates the support (24) in the region of the frictional connection or coupling (20) and acts on the outside thereof.

10. Lead insertion means according to one of claims 1 to 9, **characterised in that** the screw sleeve (10) which serves to secure the elongate member or cable is rotatable so as to carry along or turn the rotary bolt (15) clockwise into its locking position, viewed from the opening of the first angle arm (4) which comprises it, and has a left-handed thread.

## Revendications

1. Entrée de câble (1) de forme angulaire comprenant deux branches (3, 4) décrivant mutuellement un angle, en vue de l'introduction et/ou de la fixation en coude de corps allongés, par exemple de conducteurs électriques, câbles ou tuyaux souples (5), dans, à travers ou sur une paroi ou un boîtier, le corps allongé s'étendant à l'oblique ou parallèlement à la surface de la paroi (2), et pénétrant notamment dans cette dernière à peu près perpendiculairement ou à l'oblique, et une zone de séparation (6) étant prévue dans la région coudée de l'entrée de câble (1) de forme angulaire, entre les deux branches (3, 4) de celle-ci, sachant que les deux branches (3, 4) sont reliées de manière pivotante et/ou libérable à la face externe de l'angle qu'elles décrivent, et peuvent être accouplées de manière amovible à la face interne dudit angle, **caractérisée par le fait qu'**une pince de serrage (12) réglable par l'intermédiaire d'un élément d'actionnement (10), ou une pièce intégrée de coincement du corps allongé, et une pièce d'accouplement pour la solidarisation libérable avec la seconde branche (3), sont prévues sur ou dans une première branche (4) éloignée de la paroi (2) ou du boîtier ; et **par le fait que** l'élément d'actionnement (10) et la pièce d'accouplement sont en liaison mutuelle opérante, de façon telle que la manoeuvre dudit élément d'actionnement (10), en vue de verrouiller la pince de serrage (12) ou la pièce intégrée de coincement sur le corps allongé, actionne également ladite pièce d'accouplement en vue de la solidarisation des deux branches (3, 4).

2. Entrée de câble selon la revendication 1, **caractérisée par le fait que** l'élément d'actionnement (10), affecté à la pince de serrage (12) ou à la pièce intégrée de coincement, est relié à la pièce d'accouplement grâce à une liaison par frottement.

3. Entrée de câble de forme angulaire selon la revendication 1 ou 2, **caractérisée par** la présence, dans ou sur la première branche (4) éloignée de la paroi (2) ou du boîtier, d'une pince de serrage (12) déformable dans le sens radial ou d'une pièce intégrée de coincement destinée à la fixation ou à la liaison du corps allongé dans la région de cette première branche (4), et d'une douille rotative (10) ou d'un capuchon taraudé matérialisant un élément d'actionnement associé, et en outre par la présence sur la première branche (4), dans la zone de transition ou de contact entre cette première branche (4) et la seconde branche (3), d'un verrou rotatif (15) matérialisant une pièce d'accouplement ; par le fait que le verrou rotatif (15) emprisonne par-derrière, en position d'accouplement, une saillie (17) qui sert de pièce d'accouplement complémentaire et se trouve sur la seconde branche (3) pouvant, être reliée à la paroi (2) ou au boîtier ; et par le fait que le verrou rotatif (15) et la douille rotative (10), ou le capuchon taraudé, sont solidarisés par frottement au moyen d'un accouplement (20) par frottement, de façon telle que ledit verrou rotatif (15) puisse être conjointement amené à sa position d'accouplement ou de blocage lors de la rotation de ladite douille rotative (10) ou dudit capuchon taraudé, jusqu'à sa position de coincement.

4. Entrée de câble selon l'une des revendications 1 à 3, **caractérisée par le fait qu'**une butée (21) prévue sur la première branche (4), affectée à une saillie de verrouillage (18) de la pièce d'accouplement ou du verrou rotatif (15), limite le mouvement ou la rotation de ce dernier, dans la position de verrouillage, vis-à-vis de l'élément d'actionnement ou de la douille rotative (10), ou du capuchon taraudé ; et **par le fait que** l'élément d'actionnement peut être déplacé, en vue du coincement du corps allongé, selon un plus grand trajet ou un plus grand angle de rotation que la pièce d'accouplement ou le verrou rotatif (15).

5. Entrée de câble selon l'une des revendications 1 à 4, **caractérisée par le fait qu'**une saillie d'encliquetage (23), disposée dans la région de la butée (21) affectée à une saillie de verrouillage (18), est emprisonnée par-derrière par le verrou rotatif (15), en position d'accouplement, au moyen d'une dent encliquetable (22) ; et **par le fait que** le frottement, entre l'élément d'actionnement et le verrou rotatif (15), est plus grand que la force antagoniste développée lors du pivotement rentrant dudit verrou rotatif (15) vers sa position de blocage emprisonnant par-derrière ladite saillie d'encliquetage (23).

6. Entrée de câble selon l'une des revendications 1 à 5, **caractérisée par le fait que** la saillie d'encliquetage (23), dont l'action peut être surmontée lors de la rotation du verrou rotatif (15) vers la position de blocage, oppose à la rotation rétrograde, en position dissociée, une plus grande force de résistance que la dissociation de l'élément d'actionnement, en particulier de la douille rotative (10) ou du capuchon taraudé, d'avec la position de coincement.

7. Entrée de câble selon l'une des revendications 1 à 6, **caractérisée par le fait que** la butée (21), conçue pour limiter le mouvement rotatoire du verrou rotatif (15) et occupant une position fixe sur la première branche (4) du coude, sert simultanément de saillie d'encliquetage (23) et possède un dimensionnement radial tel qu'une dent encliquetable (22), située sur le pourtour dudit verrou rotatif (15) avant la saillie de verrouillage (18) de ce dernier qui dépasse dans le sens radial, puisse se mouvoir en regard de ladite saillie d'encliquetage (23), avec effet de déclic.

8. Entrée de câble selon l'une des revendications 1 à 7, **caractérisée par le fait que** le verrou rotatif (15) est réalisé sous la forme d'un disque annulaire sur le pourtour duquel la saillie de verrouillage (18) dépasse radialement et qui présente, dans la région de son montage rotatif, une manchette (24) s'étendant axialement et avec laquelle une région extrême (10a) de la douille rotative (10) ou du capuchon taraudé vient en prise par frottement, mais peut toutefois poursuivre sa rotation relative en position de blocage dudit verrou rotatif (15).

9. Entrée de câble selon la revendication 8, **caractérisée par le fait que** la région extrême (10a) de la douille rotative (10), ou capuchon taraudé, reçoit la manchette (24) dans la région de la solidarisation ou de l'accouplement (20) par frottement, et sollicite extérieurement ladite manchette.

10. Entrée de câble selon l'une des revendications 1 à 9, **caractérisée par le fait que**, en vue d'entraîner ou de faire tourner le verrou rotatif (15) jusqu'à sa position de blocage, la douille vissable (10), servant au verrouillage du corps allongé ou du câble, peut accomplir une rotation dans le sens horaire observée à partir de l'ouverture de la première branche (4) du coude, sur laquelle elle se trouve, et est munie d'un filetage à gauche.
